# EUROPEAN PATENT APPLICATION

(11) **EP 4 459 036 A1**
(43) Date of publication of application: **06.11.2024**
(21) Application number: 23781234.2
(22) Date of filing: 22.03.2023
(51) Int. Cl.: D06F 43/08, B01D 5/00

(54) **DISTILLATION UNIT**

(30) Priority: 29.03.2022 KR 20220039107; 29.03.2022 KR 20220039180
(71) Applicant: LG Electronics Inc., Yeongdeungpo-gu Seoul 07336 (KR)
(72) Inventor: KIM, Jung Han, Seoul 08592 (KR); KIM, Bong Jae, Seoul 08592 (KR); KWON, Sang Hyuk, Seoul 08592 (KR); CHOI, Byung Ha, Seoul 08592 (KR); KIM, Yang Gyu, Seoul 08592 (KR); LEE, Jang Seok, Seoul 08592 (KR)
(74) Representative: Vossius & Partner Patentanwälte Rechtsanwälte mbB
(86) International application number: PCT/KR2023/003799
(87) International publication number: WO 2023/191378

(57) **Abstract**

Provided is a distillation unit including a shell formed in a cylindrical shape extending in an axial direction with an opening part formed at one side of the axial direction, a heat exchanger disposed inside the shell, and a support structure disposed inside the shell and configured to support the heat exchanger for the shell, and the heat exchanger includes heat exchange piping of which a plurality of pipes formed in a horizontal spiral shape is arranged in a vertical direction, the support structure is formed in a plate shape crossing the axial direction, and the heat exchange piping is seated across the support structure in the axial direction.

## Description

### Technical Field

The present disclosure relates to a distillation unit. More specifically, the present disclosure relates to a distillation unit that separates a contaminant by distilling carbon dioxide used as a refrigerant in a clothing treatment device that performs carbon dioxide dry-cleaning.

### Background Art

A generally used dry-cleaning solvent is environmentally harmful and a factor dangerous for health and safety. Perchloroethylene as a representative dry-cleaning solvent is treated as a carcinogen. A generally used gasoline-based solvent is dangerous due to flammability and generate smog.

In order to solve such a problem of the gasoline-based solvent, a dry-cleaning system using carbon dioxide has been developed. Carbon dioxide is nontoxic, nonflammable, does not generate the smog, and is unlimited in amount. In addition, liquid carbon dioxide may be a proper dry-cleaning agent because liquid carbon dioxide does not damage fabric and may be dissolved in dye.

In the dry-cleaning system using the carbon dioxide, a washing operation may be performed with the carbon dioxide supplied to a washing tub. The carbon dioxide which is used in the washing operation and contaminated is discharged to a distillation tub connected to the washing tub. While vaporized by a heat exchanger provided inside the distillation tub, the contaminated carbon dioxide is separated from a contaminant. At this point, a compressor provided to the dry-cleaning system is supplied with the carbon dioxide from the distillation tub, compresses the carbon dioxide into high-temperature carbon dioxide, and then supplies the high-temperature carbon dioxide to the heat exchanger inside the distillation tub.

Recently, attempts to miniaturize such a dry-cleaning system using the carbon dioxide are continued. To this end, miniaturization of an element inside the dry-cleaning system, namely, the washing tub, a storage tub, the distillation tub, or the like is required.

However, in a distillation tub used in a related dry-cleaning system, a header of the heat exchanger, which is disposed inside a shell, has been directly connected to an outward pipe straightly extending from an inlet port formed to the shell. Accordingly, a dead volume has been increased between the heat exchanger and an inner circumferential surface of the shell.

Also, a shell having a small inner diameter is required for producing a compact distillation tub. In a structure of a related distillation tub, since coupling of the heat exchanger has been to be performed at a position at which the inlet port and an outlet port are formed, a space for coupling the heat exchanger to the inlet port and the outlet port has been insufficient when the compact distillation tub is produced. Thus, work efficiency has been decreased.

Meanwhile, for the related distillation tub, a support structure for supporting the heat exchanger in a vertical direction has been proposed, but the heat exchanger has not been stably supported inside the shell because a structure that holds motions of the heat exchanger in a horizontal direction and a circumferential direction has been absent.

Furthermore, the structure that supports the heat exchanger in the horizontal and circumferential directions has been absent in the related distillation tub, and thus, a load has concentrated on a header coupling part that is a connection region of the heat exchanger. Accordingly, damage to the coupling part has been induced.

In addition, in the related distillation tub, adjustment of a position of the heat exchanger has been difficult in a process of installing the heat exchanger inside the shell. Thus, production efficiency has been decreased.

### Disclosure of Invention

### Technical Goals

The present disclosure is to provide a distillation unit that may minimize a dead volume formed inside a distillation tub shell and a clothing treatment device including a same.

In addition, the present disclosure is to provide a distillation unit that may improve work efficiency by providing, for production of a distillation tub, a structure for further easily performing work of coupling a heat exchanger to an inlet port and an outlet port and a clothing treatment device including a same.

Also, the present disclosure is to provide a distillation unit that provides a structure for supporting a heat exchanger in vertical, horizontal, and circumferential directions so that the heat exchanger is stably supported inside a shell.

Furthermore, the present disclosure is to provide a distillation unit that may prevent, through stable support of a heat exchanger, a load from concentrating on a header coupling part that is a connection region of the heat exchanger and may accordingly prevent damage to the header coupling part.

Moreover, the present disclosure is to provide a distillation unit in which a position of a heat exchanger may be easily adjusted in a process of installing the heat exchanger inside a shell and accordingly increase production efficiency.

### Technical solutions

According to an aspect, there is provided a distillation unit including a shell formed in a cylindrical shape extending in an axial direction, forming a distillation space inside the shell, and including an inlet port and an outlet port, and a heat exchanger disposed inside the shell.

At this point, the heat exchanger may include an inlet header, an outlet header, heat exchange piping connecting the inlet header and the outlet header and including a plurality of horizontal pipes, an inlet separation header connecting the inlet header and the inlet port, and an outlet separation header connecting the outlet header and the outlet port, the inlet separation header may be connected to the inlet header and the inlet port in a separable manner, and the outlet separation header may be connected to the outlet header and the outlet port in a separable manner.

Through this, a dead volume formable inside a distillation tub shell may be minimized.

In addition, work efficiency may be increased by providing, for production of the distillation tub, a structure for easily performing work of coupling the heat exchanger to the inlet port and the outlet port.

The inlet header may include a bus part disposed to a lower area of the heat exchange piping and configured to supply a refrigerant to the heat exchange piping, a connection part connected to the bus part and extending from the bus part to an upper area of the heat exchange piping, and a detour part connected to the connection part in the upper area of the heat exchange piping, the inlet separation header may be connected to the detour part, and the detour part and the inlet separation header may form a spiral refrigerant detour path between the inlet port and the connection part.

The shell may include, at one side of the axial direction, an opening part for inserting and installing the heat exchanger, and the refrigerant detour path may be formed at a side of the opening part near the connection part and the inlet port.

The detour part may include a first portion extending from an upper end of the connection part in a horizontal direction crossing the axial direction, a third portion extending in the horizontal direction and connected to the separation header, and a second portion connecting the first portion and the third portion.

The shell may include, at one side of the axial direction, an opening part for inserting and installing the heat exchanger, and the third portion may be disposed at a side of the opening part near the first portion.

The shell may include, at one side of the axial direction, an opening part for inserting and installing the heat exchanger, and the inlet port may be disposed between the connection part and the opening part.

The inlet separation header may be connected to the inlet header in an extension direction of an end part of the inlet header.

The inlet separation header and the inlet header may be coupled by a nipple socket.

The outlet header may extend in an upper area of the heat exchange piping in a horizontal direction crossing the axial direction, the outlet separation header may extend in the axial direction at a horizontal outside, and the outlet separation header may include a portion that is to be coupled by an elbow socket.

The shell may include, at one side of the axial direction, an opening part for inserting and installing the heat exchanger, and the outlet port may be disposed opposite the opening part with the inlet port in between.

According to another aspect, there is also provided a distillation unit including a shell formed in a cylindrical shape extending in an axial direction with an opening part formed at one side of the axial direction, a heat exchanger disposed inside the shell, and a support structure disposed inside the shell and configured to support the heat exchanger for the shell

At this point, the heat exchanger may include heat exchange piping of which a plurality of pipes formed in a horizontal spiral shape is arranged in a vertical direction, the support structure may be formed in a plate shape crossing the axial direction, and the heat exchange piping may be seated across the support structure in the axial direction.

Through this, the heat exchanger inside the shell may be stably supported.

In addition, a load may be prevented, through stable support of the heat exchanger, from concentrating on a header coupling part that is a connection part of the heat exchanger, and thus, damage to the header coupling part may be prevented.

The support structure may include a frame extending in a circumferential direction along an inner circumferential surface of the shell, a plurality of clamps extending in a horizontal direction crossing the axial direction, arranged in the vertical direction, and coupled to the frame, and a plurality of clamp support parts extending in the horizontal direction, arranged alternately with the plurality of clamps in the vertical direction, and coupled to the frame, and each layer of the heat exchange piping may be disposed between the plurality of clamps and the plurality of clamp support parts.

Each of the plurality of clamps may include a body part extending in the horizontal direction, and a plurality of protruding parts protruding downward from the body part, and a clamp hole on which each pipe of the heat exchange piping is to be seated across may be formed between the plurality of protruding parts.

The frame may include an outer circumferential part extending in an arc shape along an inner side surface of the shell, and two flange parts protruding toward an inside of the outer circumferential part and arranged in the axial direction, the plurality of clamp support parts may include a plate part extending in the horizontal direction, and a coupling part protruding from edges of one sides and another sides, of the axial direction, of both end parts of the plate part toward an upper part so as to cover both end parts of the clamps which are disposed to the upper part, and the both end parts of the clamps, the coupling part, and the flange parts may be fixed to each other with a coupling member penetratingly coupled in the axial direction in a state in which the both end parts of the clamps, the coupling part, and the flange parts overlap each other.

The flange parts may be formed in a circumferential direction along an inner circumferential surface of the outer circumferential part.

Each of the plurality of clamp support parts may include a plate part extending in the horizontal direction, and a guide part protruding from edges of one side and another side, of the axial direction X, of the plate part toward a lower part so as to cover the clamps disposed to the lower part.

The distillation unit may further include a rail protruding inward and extending in the axial direction from an inner circumferential surface of the shell, and a rail guide may be formed, to the support structure, to be engraved at a position corresponding to the rail and may be seated on the rail.

Through this, a position of the heat exchanger may be easily adjusted in a process of installing the heat exchanger inside the shell, and accordingly, production efficiency may be increased.

The support structure may include a first support structure disposed at the one side of the axial direction, and a second support structure disposed at another side of the axial direction, and the first support structure may include a fixation foot that extends from a radially directed inner end part of the rail guide toward the one side of the axial direction along the rail and is fixed to the rail.

A coupling hole extending in the axial direction may be formed to the fixation foot, and the heat exchanger may be fixed to the shell by allowing a fixation member to penetrate the coupling hole and to be coupled to the rail.

### Effects

Through the present disclosure, it is possible to minimize a dead volume formable inside a distillation tub.

In addition, it is possible to improve work efficiency by providing, for production of the distillation tub, a structure for further easily performing work of coupling a heat exchanger to an inlet port and an outlet port.

Also, the heat exchanger may be stably supported.

Furthermore, a load may be prevented, through stable support of the heat exchanger, from concentrating on a header coupling part that is a connection region of the heat exchanger. Accordingly, it is possible to prevent damage to the header coupling part.

Additionally, adjustment of a position of the heat exchanger may be easily adjusted in a process of installing the heat exchanger inside a shell, and thus, production efficiency may be increased.

### Brief Description of Drawings

FIG. 1 is a diagram illustrating a dry-cleaning system of a clothing treatment device according to an example embodiment of the present disclosure.
FIG. 2 is a perspective diagram illustrating a distillation unit according to an example embodiment of the present disclosure.
FIG. 3 is an exploded perspective diagram illustrating a distillation unit according to an example embodiment of the present disclosure.
FIG. 4 is a sectional diagram illustrating a distillation unit according to an example embodiment of the present disclosure.
FIG. 5 is a perspective diagram illustrating a portion of elements of a distillation unit according to an example embodiment of the present disclosure.
FIG. 6 is an exploded perspective diagram illustrating a portion of elements of a distillation unit according to an example embodiment of the present disclosure.
FIG. 7 is a plan diagram illustrating a portion of elements of a distillation unit according to an example embodiment of the present disclosure.
FIG. 8 is a side diagram illustrating a portion of elements of a distillation unit according to an example embodiment of the present disclosure.
FIG. 9 is a plan diagram illustrating a portion of elements of a distillation unit according to an example embodiment of the present disclosure.
FIG. 10 is a side diagram illustrating a distillation unit according to an example embodiment of the present disclosure.
FIG. 11 is a perspective sectional diagram illustrating a portion of elements of a distillation unit according to an example embodiment of the present disclosure.
FIGS. 12 and 13 are perspective diagrams illustrating a portion of elements of a distillation unit according to an example embodiment of the present disclosure.
FIG. 14 is an exploded perspective diagram illustrating a portion of elements of a distillation unit according to an example embodiment of the present disclosure.
FIG. 15 is an enlarged perspective sectional diagram illustrating a portion of elements of a distillation according to an example embodiment of the present disclosure.

### Best Mode for Carrying Out the Invention

Terms used in example embodiments are general terms that are currently widely used while their respective functions in the present disclosure are taken into consideration. However, the terms may be changed depending on intention of one of ordinary skilled in the art, legal precedents, emergence of new technologies, and the like. Further, in certain cases, there may be terms arbitrarily selected by the applicant, and in this case, the meaning of the term will be described in detail in the corresponding description. Accordingly, the terms used herein are not to be construed simply as its designation but based on the meaning of the term and the overall context of the present disclosure.

Terms "module" and "part" used for elements in the following description are granted or used together in consideration only of easy drawing of the specification and do not have meanings or roles that may be independently distinguished. Also, in the descriptions of example embodiments in the present disclosure, when a description for prior art is determined to obscure the gist of the present disclosure, the detailed description will be omitted. In addition, the accompanying drawings is to easily understand example embodiments included in the present disclosure, does not limit the technical spirit of the present disclosure, and may be understood as including all changes, equivalents, or substitutes included in the spirit and the technical scope of the present disclosure.

Terms including an ordinal number such as "first" or "second" used in the present specification may be used to describe various elements. However, the elements may not be limited by the terms. The terms are used to distinguish one element from another element.

When an element is described as being "connected" or "joined" to another element, it may be understood that the element is directly connected or joined to the other element or that still another element is present in between. In contrast, when an element is described as being "directly connected" or "directly joined" to another element, it may be understood that still another element is absent in between.

Terms in a singular form used in the present specification includes all of the terms in the singular form and a plural form unless an apparently and contextually conflicting description is present.

Terms such as "include" or "have" throughout the specification is to indicate that a feature, a number, a step, an operation, an element, a component, or a combination thereof described in the specification is present and may be understood as not excluding beforehand possibilities of adding or existence of one or more other features, numbers, steps, operations, elements, components, or combinations thereof.

Throughout the specification, expression "at least one of a, b, and c" may include 'a only', 'b only', 'c only', 'a and b', 'a and c', 'b and c', or 'all of a, b, and c'.

In the following description, example embodiments of the present disclosure will be described in detail with reference to the drawings so that those skilled in the art may easily carry out the present disclosure. The present disclosure may be embodied in many different forms and is not limited to example embodiments described herein.

Hereinafter, example embodiments of the present disclosure will be described with reference to the drawings. Since the hundreds digit in a reference numeral of an identical element may be written variously depending on example embodiments, unless individually described, the element may be treated to be identical to an element, of another example embodiment, of which digits less than the hundreds digit are equal to those of the element (for example, an element corresponding to reference numeral 220 of a second example embodiment may have a characteristic identical to that of an element corresponding to reference numeral 120 of a first example embodiment).

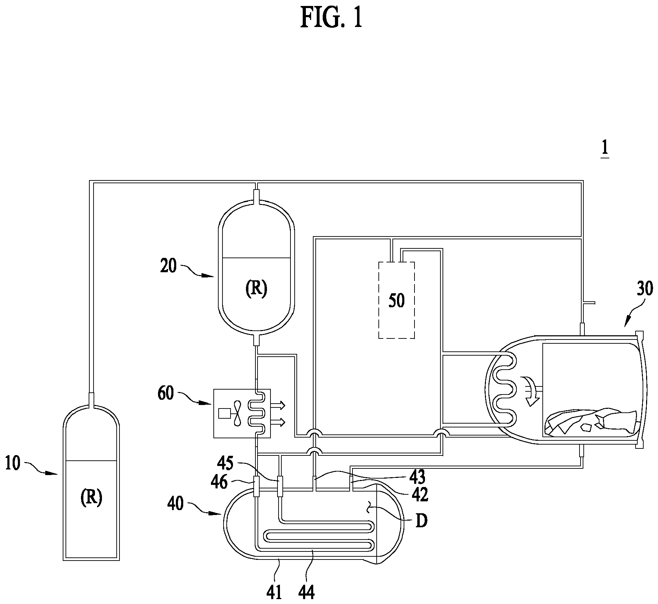

FIG. 1 is a diagram illustrating a dry-cleaning system of a clothing treatment device according to an example embodiment of the present disclosure.

Hereinafter, a clothing treatment device 1 of the present disclosure will be described with an example of using carbon dioxide as a solvent to perform dry-cleaning, but is not limited thereto. A dry-cleaning system of a clothing device according to the present disclosure may use another solvent having an identical or similar cycle.

Hereinafter, the clothing treatment device 1 according to the present disclosure may include a supply unit 10, a washing unit 30, a distillation unit 40, a compression system 50, a freezing unit 60, and a storage unit 20. However, the clothing treatment device 1 may be carried out without a portion of the above-described elements and not exclude an additional element.

Referring to FIG. 1, the clothing treatment device 1 may include the supply unit 10. The supply unit 10 may be connected to the washing unit 30. The supply unit 10 may supply a refrigerant R to the washing unit 30. Hereinafter, the refrigerant R may be understood as being referred to as the carbon dioxide.

The clothing treatment device 1 may include the washing unit 30. The washing unit 30 may be supplied with the refrigerant R. The refrigerant R may be supplied from the supply unit 10 and/or the storage unit 20 which will be described below. The washing unit 30 may perform washing of laundry. In addition, the washing unit 30 may perform a rinsing process after a washing process. The refrigerant R which completes the washing and/or rinsing and is contaminated may be discharged to the distillation unit 40.

The clothing treatment device 1 may include the distillation unit 40. The distillation unit 40 may be positioned next to the washing unit 30 on a path of the refrigerant R.

The distillation unit 40 may include a shell 41. A distillation space D may be formed inside the shell 41. The contaminated refrigerant R discharged after the washing unit 30 performs the washing inside the distillation space D may be received in the distillation space D. The refrigerant R discharged from the washing unit 30 may flow into the distillation space D via an inflow port 112 formed to the shell 41.

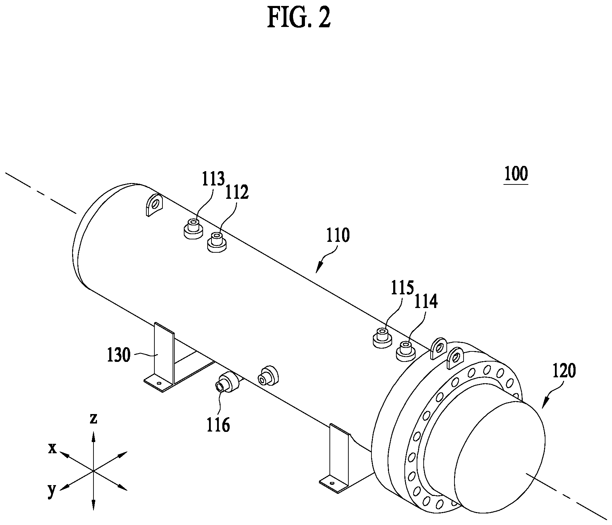

The contaminated refrigerant R may be separated from an impurity while distilled in the distillation space D. At this point, the refrigerant R may be distilled by a heat exchanger 44 disposed inside the shell 41. The distilled refrigerant R may be discharged via a discharge port 43 formed to the shell 41, flow into the compression system 50, and be precipitated in a lower part of the distillation space D. A structure of the heat exchanger 44 will be described in detail with reference to FIGS. 2 through 10.

The clothing treatment device 1 may include the compression system 50. One side of the compression system 50 may be connected to the distillation space D of the distillation unit 40, and another side of the compression system 50 may be connected to the heat exchanger 44 of the distillation unit 40. The compression system 50 may compress the refrigerant R distilled in the distillation space D. The compression system 50 may supply the refrigerant R which is compressed with a high temperature and a high pressure to the heat exchanger 44 of the distillation unit 40.

The distillation unit 40 may include the heat exchanger 44. One side of the heat exchanger 44 may be connected to an inlet port 45 formed to the shell 41, and another side of the heat exchanger 44 may be connected to an outlet port 46 formed to the shell 41. The refrigerant R compressed with the high temperature and the high pressure in the compression system 50 may flow to the heat exchanger 44 via the inlet port 45. The heat exchanger 44 may heat the contaminated refrigerant R received in the distillation space D through the refrigerant R which has the high temperature and the high pressure and flows therein. The refrigerant R which completes heat exchange may be discharged from the distillation unit 40 via the outlet port 46.

The clothing treatment device 1 may include the freezing unit 60. One side of the freezing unit 60 may be connected to an outside of the outlet port 46 of the distillation unit 40, and another side of the freezing unit 60 may be connected to the storage unit 20. The refrigerant R which passes through the heat exchanger 44 may be discharged to the outlet port 46 of the distillation unit 40 and flow into the freezing unit 60. The freezing unit 60 may freeze the refrigerant R which is discharged from the heat exchanger 44 and then supply the refrigerant R to the storage unit 20.

The clothing treatment device 1 may include the storage unit 20. One side of the storage unit 20 may be connected to the freezing unit 60. The storage unit 20 may store the refrigerant R which is liquefied by the freezing unit 60. When the washing process and/or the rinsing process is started, the storage unit 20 may supply the refrigerant R stored therein to the washing unit 30.

Hereinafter, circulation of carbon dioxide R according to the washing process and/or the rinsing process will be described.

The laundry may be positioned in the washing unit 30 for the washing and/or the rinsing. When a door of the washing unit 30 is closed, a washing tub of the washing unit 30 is decompressed to be a vacuum. Before the washing process and/or the rinsing process is started, the carbon dioxide R in a gaseous state may be supplied from the supply unit 10 and/or the storage unit 20, and the washing unit 30 may be compressed by the carbon dioxide R.

During the washing process, the carbon dioxide R may dissolve a contaminant of the laundry in the washing unit 30. After the washing process is ended, the carbon dioxide R in a liquid state in the washing unit 30, which is contaminated, may be discharged to the distillation unit 40 via an outlet.

The rinsing process may be started immediately after the washing process is ended. At this point, the carbon dioxide R which is clean may be supplied again to the washing unit 30. Similarly to the washing process, the carbon dioxide R in the liquid state in the washing unit 30 may be discharged to the distillation unit 40 via the outlet after the rinsing process is ended.

The carbon dioxide R discharged from the washing unit 30 may be collected in the distillation space D formed inside the shell 41 of the distillation unit 40.

In parallel with the rinsing process, distillation of the carbon dioxide R in the liquid state, which is contaminated, may be started in the distillation unit 40. The distillation may be performed while the carbon dioxide R which is contaminated and received to the distillation space D is heated by the heat exchanger 44 disposed inside the distillation unit 40.

Specifically, the carbon dioxide R distilled in the distillation space D and discharged therefrom may flow into the compression system 50 connected to the discharge port 43 of the shell 41. The compression system 50 may compress the carbon dioxide R flowing in and generate high-temperature and high-pressure carbon dioxide R. The high-temperature and high-pressure carbon dioxide R may be supplied to a flow path forming the heat exchanger 44 disposed inside the distillation unit 40 and connected to the compression system 50. The high-temperature carbon dioxide R which flows along the flow path may heat the carbon dioxide R contaminated and received to the distillation space D. At this point, the carbon dioxide R which flows into the heat exchanger 44 may be understood as the carbon dioxide R which has been already distilled and released from the distillation space D and is in a clean state.

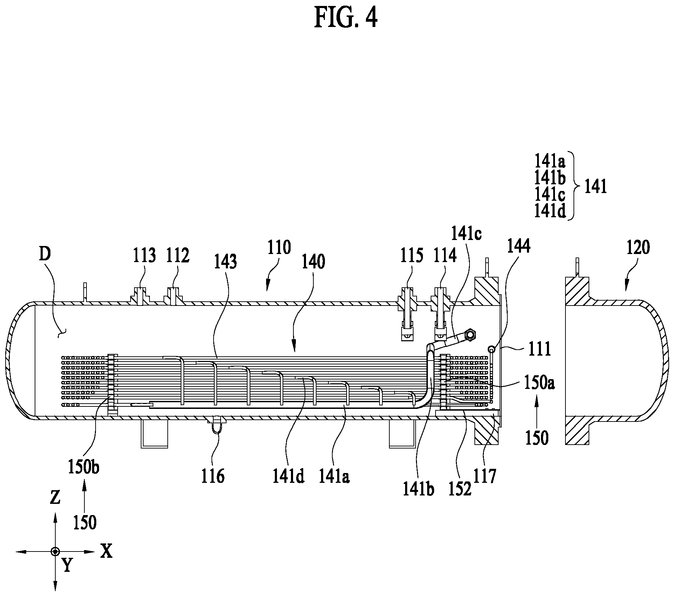

The impurity may be separated while the carbon dioxide R is distilled in the distillation space D. That is, in the carbon dioxide R which is contaminated, the carbon dioxide R may be distilled and flow into the compression system 50, and the impurity may be precipitated in a lower side of the distillation space D. The impurity precipitated as such may be collected through a drain port 116 (illustrated in FIG. 4) formed to a lower part of the distillation unit 40.

The carbon dioxide R which is clean and passes through the heat exchanger 44 may be frozen by the freezing unit 60. The frozen carbon dioxide R may be liquefied and stored in the storage unit 20.

As such, the circulation of the carbon dioxide R is completed during one washing process and/or one rinsing process, the carbon dioxide R stored in the storage unit 20 may be supplied to the washing unit 30 for a subsequent washing process and/or a subsequent rinsing process.

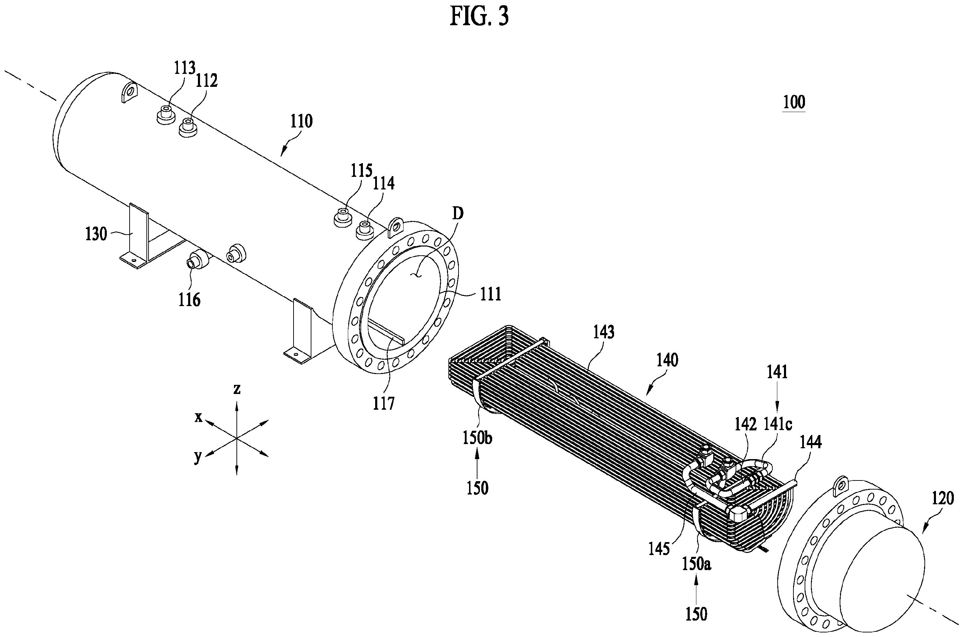

FIG. 2 is a perspective diagram illustrating a distillation unit according to an example embodiment of the present disclosure. FIG. 3 is an exploded perspective diagram illustrating a distillation unit according to an example embodiment of the present disclosure. FIG. 4 is a sectional diagram illustrating a distillation unit according to an example embodiment of the present disclosure.

Hereinafter, with a reference of FIG. 4, a lateral direction in which a shell 110 extends may be referred to as an axial direction X. A right side at which an opening part 111 is formed may be referred to as one side of the axial direction X. An opposite side may be referred to as another side of the axial direction X. In addition, a side direction crossing the axial direction X may be referred to as a horizontal direction Y. A vertical direction with the reference of FIG. 4 may be a vertical direction Z.

Hereinafter, in the present disclosure, a distillation unit 100 will be described with an example of being used in a dry-cleaning system, but is not limited thereto. The distillation unit 100 according to an example embodiment of the present disclosure may be applied to various products that pass through an identical or similar cycle in which a distillation process is performed.

Referring to FIGS. 2 through 4, the distillation unit may include the shell 110. The shell 110 may be formed in a cylindrical shape extending in the axial direction X. The shell 110 may be disposed to lie in a crosswise direction or disposed to lie in the axial direction. With a reference of FIG. 2, the shell 110 may extend to be long in the axial direction X and may have a relatively small radius in a radial direction. In other words, since miniaturization of the distillation unit 100 is required for miniaturization of the dry-cleaning system, it may be desired that the distillation unit 100 is formed in a maximally compact shape.

The shell 110 may include the opening part 111. The opening part 111 may be formed at one side, of the axial direction, of the shell 110. A heat exchanger 140 may be inserted and installed inside the shell 110 through the opening part 111.

The shell 110 may include the inflow port 112 and a discharge port 113. The refrigerant R which is contaminated and discharged from the washing unit 30 (illustrated in FIG. 1) may flow into the distillation space D via the inflow port 112. The refrigerant R which is distilled in the distillation space D may flow into the compression system 50 (illustrated in FIG. 1) via the discharge port 113.

The shell 110 may include an inlet port 114. The inlet port 114 may be formed on a side surface of the shell 110. An inside of the inlet port 114 may be coupled to one end part of the heat exchanger 140, and an outside of the inlet port 114 may be connected to a pipe from the compression system 50 (illustrated in FIG. 1). The refrigerant R which is discharged from the compression system 50 and has a high temperature and a high pressure may flow, via the inlet port 114, into the heat exchanger 140 which is disposed inside the shell 110.

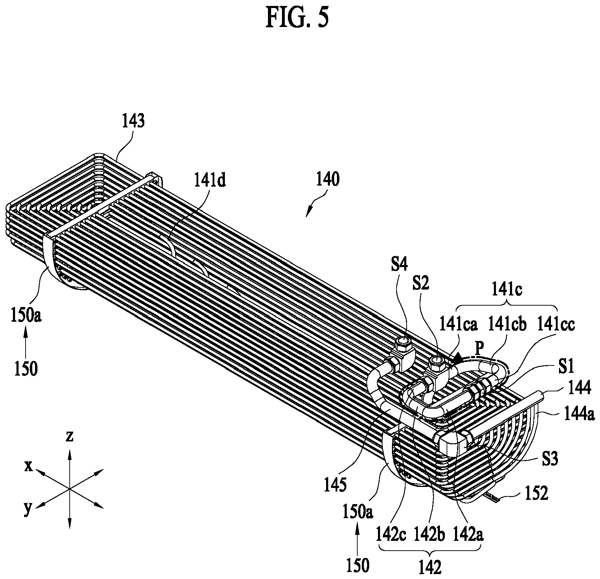

Referring to FIG. 4, the inlet port 114 may be disposed at a side of the opening part 111 of the shell 110 near a connection part 141b of an inlet header 141 that will be described below. Specifically, since the inlet port 114 and the connection part 141b may not be directly connected, and since a refrigerant detour path P (illustrated in FIG. 5) may be formed through a detour part 141c of the inlet header 141 and an inlet separation header 142 connected thereto, a formation position of the inlet port 114 may be further flexible. Accordingly, since the inlet port 114 may be disposed to be adjacent to the opening part 111 of the shell 110, work of coupling the inlet separation header 142 to the inlet port 114 may be easily performed when the distillation unit 100 is produced.

The shell 110 may include an outlet port 115. The outlet port 115 may be disposed on a side surface of the shell 110. An inside of the outlet port 115 may be coupled to another end part of the heat exchanger 140, and an outside of the outlet port 115 may be coupled to a pipe to the freezing unit 60 (illustrated in FIG. 1). The refrigerant R which finishes heat exchange with the distillation space D in the heat exchanger 140 may be discharged to an outside of the shell 110 via the outlet port 115.

The outlet port 115 and the inlet port 114 may be arranged in the axial direction X. The outlet port 115 may be disposed opposite the opening part 111 with the inlet port 114 in between. Through this, an outlet separation header 145 may not interfere with the inlet separation header 142 and the inlet header 141 inside the shell 110.

As the inlet port 114 becomes adjacent to the opening part 111 of the shell 110, the outlet port 115 may together become closer to the opening part 111. Through this, work of coupling the outlet separation header 145 to the outlet port 115 may be easily performed when the distillation unit 100 is produced.

The inflow port 112, the discharge port 113, the inlet port 114, and the outlet port 115 may be disposed to an upper part of the shell 110. Since the refrigerant R which completes washing in the washing unit 30 (illustrated in FIG. 1) may be generally drained from the washing unit 30 (illustrated in FIG. 1) by gravity, and since the drained refrigerant R is to flow into the distillation unit 100, the distillation unit 100 may be disposed to a lower part of the washing unit 30 (illustrated in FIG. 1). In other words, since the distillation unit 100 may be disposed at a lowest position inside a housing provided to the clothing treatment device 1 (illustrated in FIG. 1), it may be desired that various ports for inflow or discharge of the refrigerant are disposed to the upper part of the shell 110 for easy connection of the distillation unit 100 and another element (e.g., the washing unit 30, the compression system 50, and/or the freezing unit 60 in FIG. 1).

The shell 110 may include the drain port 116. The drain port 116 may be formed to a lower part of the shell 110. The drain port 116 may discharge an impurity precipitated while the refrigerant R is distilled in the distillation space D.

Referring to FIGS. 3 and 4, the shell 110 may include a rail 117. The rail 117 may protrude from an inner circumferential surface of the shell 110 toward a radially directed inside of the shell 110. The rail 117 may extend in the axial direction X. Specifically, the rail 117 may be formed to a lower area of the inner circumferential surface of the shell 110. A rail guide 151 of a support structure 150 that will be described below may be seated on the rail 117. The rail 117 may guide the support structure 150 to an installation position when the support structure 150 is installed.

Referring to FIG. 4, the rail 117 may extend in the axial direction X in an area in which a first support structure 150a is disposed and may not be formed in an area in which a second support structure 150b is disposed. Through this, interference of the drain port 116 formed to the lower part of the shell 110 and the rail 117 with each other may be solved.

However, it is not limited thereto. The rail 117 may extend in the axial direction X across an area in which the first support structure 150a and the second support structure 150b are formed. In this case, the drain port 116 may be formed at a slightly one-sided position in the lower part of the shell 110 so as not to overlap a portion at which the rail 117 is formed. When the rail 117 is formed across the area in which the first support structure 150a and the second support structure 150b are formed, since the rail guide 151 of each of the first support structure 150a and the second support structure 150b may be seated on the rail 117, the heat exchanger 140 may be further stably seated on the shell 110.

The distillation unit 100 may include a shell cover 120. The shell cover 120 may be coupled to one side, of the axial direction X, of the shell 110. The shell cover 120 may close the opening part 111 of the shell 110. A flange extending toward an outside of the radial direction may be formed to a circumference of the one side, of the axial direction X, of the shell 110 and a circumference of another side, of the axial direction X, of the shell cover 120. The shell 110 and the shell cover 120 may be coupled to each other with a method such as welding or bolting coupling after flanges of the shell 110 and the shell cover 120 are brought into contact with each other.

The distillation space D may be formed inside the shell 110 and the shell cover 120. That is, it may be understood that the distillation space D is a space sealed with the shell 110 and the shell cover 120 and that the shell 110 and the shell cover 120 are a casing forming the distillation space D. The distillation space D may receive therein the refrigerant R which is discharged after performing the washing in the washing unit 30 (illustrated in FIG. 1) and contaminated.

Referring to FIG. 2, the distillation unit 100 may include a leg 130. The leg 130 may be coupled to a lower side of the shell 110. The leg 130 may be coupled to a base of a product to which the distillation unit 100 is installed.

The distillation unit 100 may include the heat exchanger 140. The heat exchanger 140 may be disposed inside the shell 110. The heat exchanger 140 may perform the heat exchange with the refrigerant received in the distillation space D.

The heat exchanger 140 and the distillation space D may not communicate with each other. In other words, the refrigerant R which has the high temperature and the high pressure and flows from the compression system 50 (illustrated in FIG. 1) to the inlet port 114 may flow to a pipe of the inlet separation header 142 coupled to the inlet port 114 inside the shell 110. Also, the refrigerant R completing the heat exchange in heat exchange piping 143 may flow in a pipe of the outlet separation header 145 coupled to the outlet port 115 inside the shell 110 and be discharged to the outside of the shell 110.

The distillation unit 100 may include the support structure 150. Two or more support structures including the support structure 150 may be provided in the axial direction X. The heat exchanger 140 may be coupled to the support structure 150 with a structure in which the heat exchange piping 143 is fitted into the support structure 150. The heat exchanger 140 may be supported inside the shell 110 by the support structure 150.

The support structure 150 may be formed in a plate shape crossing the axial direction X. When viewed from a section that is cut in a direction of a plane crossing the axial direction X, the support structure 150 may be formed in a size that may cover an area in which a bundle of the heat exchange piping 143 is disposed.

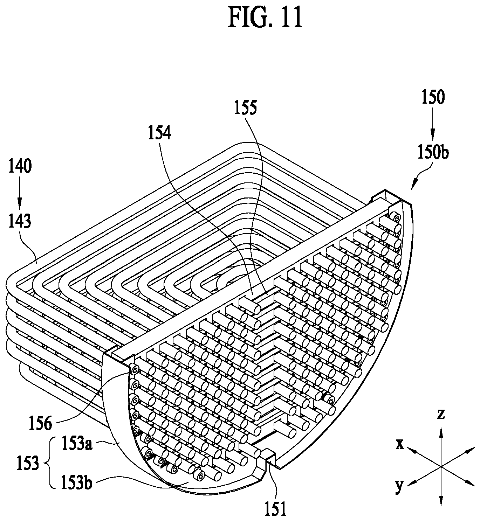

The support structure 150 may support the heat exchanger 140 for the shell 110. Specifically, the heat exchange piping 143 may be seated across the support structure 150 in the axial direction X and on the support structure 150. Through this, the heat exchanger 140 may be supported by the support structure 150 for the shell 110. A detailed description of the support structure 150 will be described below in detail with reference to FIGS. 11 through 15.

The rail guide 151 may be formed to the support structure 150. The rail guide 151 may be formed as a groove to a lower end part of the support structure 150. The rail guide 151 may be seated on the rail 117 which is formed on the inner circumferential surface of the shell 110.

The support structure 150 may include a fixation foot 152. The fixation foot 152 may extend toward the one side of the axial direction X from an upper end part of the rail guide 151. When the support structure 150 is seated on the rail 117, the fixation foot 152 may be seated on an upper surface of the rail 117. When the fixation foot 152 is fixed to the rail 117, the support structure 150 may be fixed to the shell 110. At this point, the fixation foot 152 may be fixed to the rail 117 by bolting coupling.

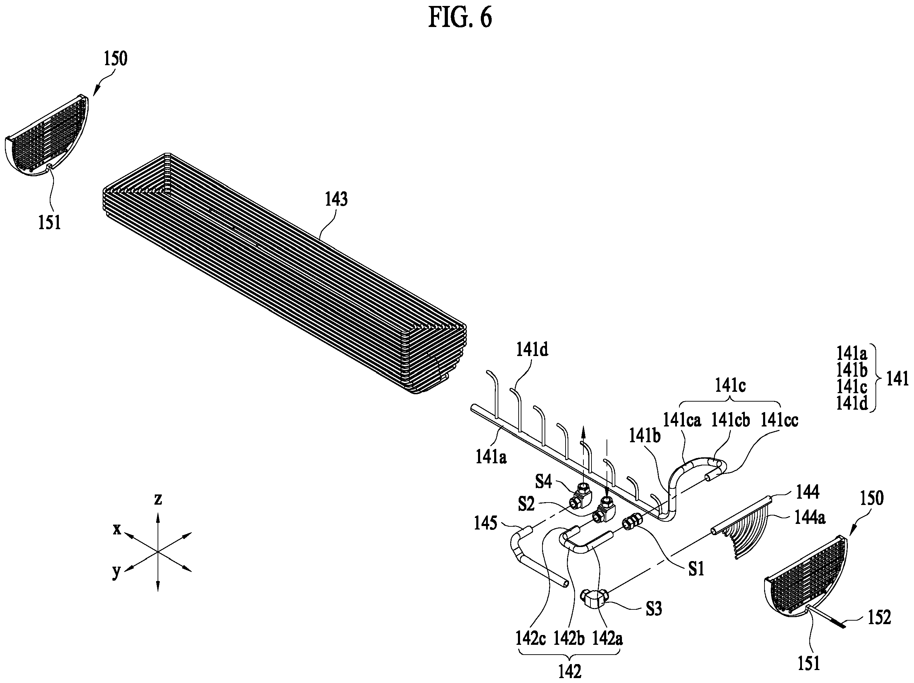

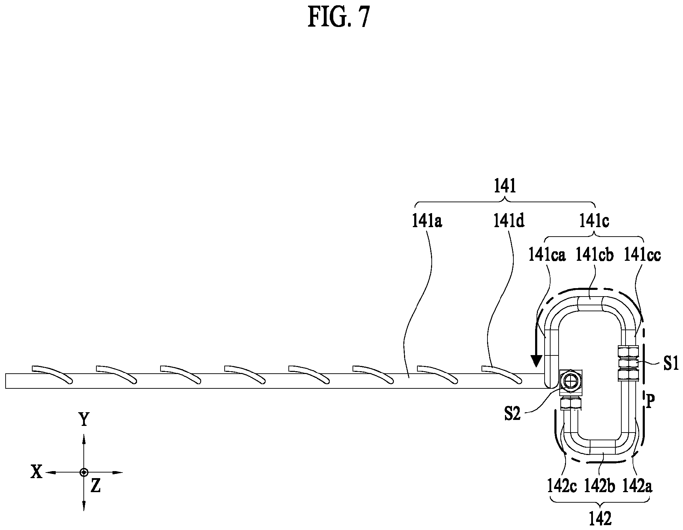

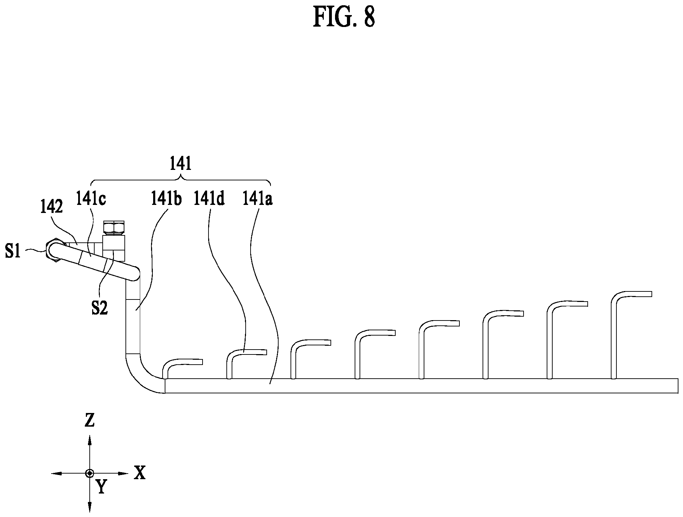

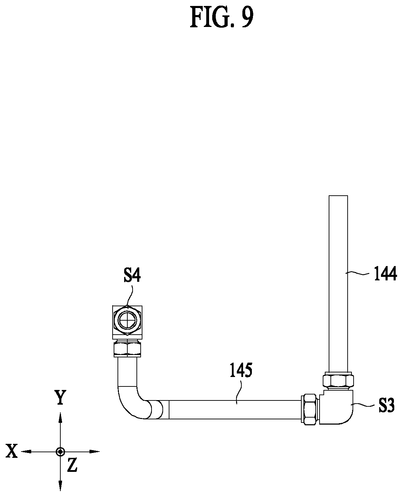

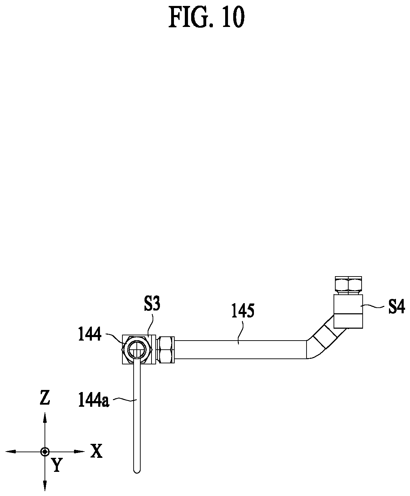

FIG. 5 is a perspective diagram illustrating a portion of elements of a distillation unit according to an example embodiment of the present disclosure. FIG. 6 is an exploded perspective diagram illustrating a portion of elements of a distillation unit according to an example embodiment of the present disclosure. FIG. 7 is a plan diagram illustrating a portion of elements of a distillation unit according to an example embodiment of the present disclosure. FIG. 8 is a side diagram illustrating a portion of elements of a distillation unit according to an example embodiment of the present disclosure. FIG. 9 is a plan diagram illustrating a portion of elements of a distillation unit according to an example embodiment of the present disclosure. FIG. 10 is a side diagram illustrating a distillation unit according to an example embodiment of the present disclosure.

FIG. 5 is a perspective diagram illustrating the heat exchanger 140 of the distillation unit 100 according to an example embodiment of the present disclosure. FIG. 6 is an exploded perspective diagram illustrating the heat exchanger 140 of the distillation unit 100 according to an example embodiment of the present disclosure. FIG. 7 is a plan diagram illustrating the inlet header 141 and the inlet separation header 142 of the distillation unit 100 according to an example embodiment of the present disclosure. FIG. 8 is a side diagram illustrating the inlet header 141 and the inlet separation header 142 of the distillation unit 100 according to an example embodiment of the present disclosure. FIG. 9 is a plan diagram illustrating an outlet header 144 and the outlet separation header 145 of the distillation unit 100 according to an example embodiment of the present disclosure. FIG. 10 is a side diagram illustrating the outlet header 144 and the outlet separation header 145 of the distillation unit 100 according to an example embodiment of the present disclosure.

Referring to FIGS. 5 through 10, the heat exchanger 140 may include the inlet header 141. The inlet header 141 may serve as a transfer pipe for transferring, to the heat exchange piping 143, the refrigerant R which flows into the inlet port 114.

The inlet header 141 may include a bus part 141a. The bus part 141a may be disposed to a lower area of the heat exchange piping 143. The bust part 141a may supply the refrigerant to the heat exchange piping 143.

The inlet header 141 may include the connection part 141b. The connection part 141b may extend from the bus part 141a to an upper area of the heat exchange piping 143. For example, the connection part 141b may penetrate gaps of pipes of the heat exchange piping 143 and extend in the vertical direction Z. The connection part 141b may be connected to the bus part 141a and supply the refrigerant to the bus part 141a.

The inlet header 141 may include the detour part 141c. The detour part 141c may be connected to the connection part 141b in the upper area of the heat exchange piping 143. The detour part 141c may be connected to the inlet separation header 142. The detour part 141c may receive and supply the refrigerant R from the inlet separation header 142 and to the connection part 141b.

The detour part 141c may form, together with the inlet separation header 142, the refrigerant detour path P (illustrated in FIG. 5) between the inlet port 114 and the connection part 141b. For example, the detour part 141c and the inlet separation header 142 may provide the refrigerant detour path P (illustrated in FIG. 5) which allows the refrigerant R to helically detour around between a flow path formed to the inlet port 114 in the vertical direction Z and a flow path formed to the connection part 141b in the vertical direction Z.

Referring to FIG. 7, the refrigerant detour path P (illustrated in FIG. 5) which is helical and provided by the refrigerant detour path P (illustrated in FIG. 5) may be formed between at a side of the opening part 111 near the inlet port 114. At this point, the inlet separation header 142 and the inlet header 141 may be coupled to each other at a portion, close to the opening part 111, of the helical refrigerant detour path P (illustrated in FIG. 5). Through this, a worker may easily couple the inlet header 141 and the inlet separation header 142 together through the opening part 111 during production of the distillation unit 100.

As an example of the detour part 141c for such a structure, the detour part 141c may include a first portion 141ca. The first portion 141ca may extend from an upper end of the connection part 141b in the horizontal direction Y crossing the axial direction X. That is, the first portion 141ca may be understood as a portion bending at the upper end of the connection part 141b toward an outside of the horizontal direction Y

In addition, the detour part 141c may include a second portion 141cb. The second portion 141cb may connect the first portion 141ca and a third portion 141cc that will be described below. The second portion 141cb may be slightly inclined upward while extending from the first portion 141ca toward one side of the axial direction X. Specifically, the third portion 141cc may be formed at a position slightly higher than the first portion 141ca, and it may be understood that the second portion 141cb is formed to be inclined to connect the first portion 141ca and the third portion 141cc.

Also, the detour part 141c may include the third portion 141cc. The third portion 141cc may extend in the horizontal direction Y The third portion 141cc may be disposed at the side of the opening part 111 near the first portion 141ca. The third portion 141cc may be understood as a portion bending inward in the horizontal direction Y at an end part of the second portion 141cb. The third portion 141cc may extend in parallel with the first portion 141ca. The third portion 141cc may be formed at a position slightly higher than the first portion 141ca. The third portion 141cc may be connected to the inlet separation header 142.

However, it is not limited thereto. The third portion 141cc or the first portion 141ca may be formed to be inclined, two portions of the first portion 141ca through the third portion 141cc may be formed to be inclined, or all the first portion 141ca through the third portion 141cc may be formed to be inclined.

Through such a structure, an end part of the detour part 141c near the connection part 141b and an end part of the detour part 141c near the inlet separation header 142 may be formed at different heights, and interference of the connection part 141b of the inlet header 141 and a coupling region between the inlet separation header 142 and the inlet port 114 with each other may be solved.

Unlike illustrations of FIGS. 5 through 8, in order to form the refrigerant detour path P together with the inlet separation header 142, the detour part 141c may be formed in various shapes such as formed in a curve when viewed from a top.

Referring to FIGS. 5 through 8, the heat exchanger 140 may include the inlet separation header 142. The inlet separation header 142 may connect the inlet header 141 and the inlet port 114. The inlet separation header 142 may be coupled to the inlet header 141 and the inlet port 114 in a separable manner. Specifically, the inlet separation header 142 may be connected to the detour part 141c of the inlet header 141, particularly to the third portion 141cc thereof.

The third portion 141cc may be a portion of the inlet header 141, which is most adjacent to the opening part 111. The distillation unit 100 may be easily produced through such a structure in which the inlet separation header 142 is connected to the third portion 141cc.

The inlet separation header 142 may be connected to the detour part 141c in an extension direction of an end part of the inlet header 141. For example, the inlet separation header 142 may be straightly connected to the third portion 141cc of the detour part 141c. Specifically, when the third portion 141cc extends in the horizontal direction Y, the inlet separation header 142 may be connected to the third portion 141cc in the horizontal direction Y. In other words, the inlet separation header 142 may be connected, in the horizontal direction Y, to a portion of the detour pat 141c, which extends in the horizontal direction Y in an area adjacent to the opening part 111. In order to realize such a coupling structure, the inlet separation header 142 and the inlet header 141 may be coupled by a nipple socket S 1. Since the inlet header 141 and the inlet separation header 142 may be coupled in a radially directed central area at a point close to the opening part 111 through such a structure, a production process of the distillation unit 100 may be facilitated.

As an example of a structure of the inlet separation header 142, the inlet separation header 142 may include a first separation part 142a. The first separation part 142a may be connected to the third portion 141cc of the detour part 141c. The first separation part 142a may be a portion extending in a direction identical to an extension direction of the third portion 141cc.

The inlet separation header 142 may include a second separation part 142b. The second separation part 142b may be connected to the first separation part 142a. The second separation part 142b may extend in the axial direction X. The second separation part 142b may be understood as a portion bending and extending from the first separation part 142a in the axial direction X. The second separation part 142b may be formed to have a length shorter than or equal to that of the second portion 141cb of the detour part 141c.

The inlet separation header 142 may include a third separation part 142c. The third separation part 142c may be connected to the second separation part 142b. The third separation part 142c may extend in the horizontal direction Y The third separation part 142c may be understood as a portion bending and extending from the second separation part 142b in the horizontal direction Y.

An end part, opposite the inlet header 141, of the inlet separation header 142 may be coupled to the inlet port 114. For example, as illustrated in FIG. 5, the third separation part 142c may be coupled to the inlet port 114. At this point, since the inlet port 114 may be formed in the vertical direction Z, and since the third separation part 142c may be formed in the horizontal direction Y, the inlet port 114 and the third separation part 142c may be coupled to an elbow socket S2 connecting pipes crossing at a right angle.

However, it is not limited thereto. The inlet separation header 142 may be formed in various shapes in order to form the refrigerant detour path P (illustrated in FIG. 5) together with the detour part 141c.

The heat exchanger 140 may include the heat exchange piping 143. The heat exchange piping 143 may connect the inlet header 141 and the outlet header 144. The heat exchange piping 143 may be formed with a plurality of pipes. It may be desired that each pipe of the heat exchange piping 143 has a small pipe diameter when compared to the inlet header 141 and the outlet header 144. Specifically, since the refrigerant R braches from the inlet header 141 and flows into each pipe of the heat exchange piping 143, a pipe diameter of the heat exchange piping 143, which is smaller than a pipe diameter of the inlet header 141, may be proper to maintain a pressure of the refrigerant R.

Specifically, referring to FIG. 6, in the heat exchange piping 143 may be branched as a plurality of flow paths from the bus part 141a of the inlet header 141. Each pipe of the heat exchange piping 143 may be connected to the bus part 141a by a plurality of inlet branch pipes 141d. Each of the inlet branch pipes 141d may extend upward and horizontally bend at an upper part. The plurality of inlet branch pipes 141d may be formed to have heights different from each other to correspond to respective disposition heights of the heat exchange piping 143. Each pipe of the heat exchange piping 143 may be connected to an end part of a horizontally bending inlet branch pipe 141d.

The plurality of pipes of the heat exchange piping 143, which is formed in a horizontal spiral shape, may be arranged in the vertical direction Z. Specifically, each pipe of the heat exchange piping 143 may be formed in the horizontal spiral shape from the inlet branch pipe 141d. An inner end part of the heat exchange piping 143 may be connected to the inlet branch pipe 141d. An outer end part of the heat exchange piping 143 may be connected to an outlet branch pipe 144a. The plurality of pipes of the heat exchange piping 143 may be arranged in the vertical direction Z. Through such a structure, a contact area between the heat exchange piping 143 and the refrigerant R which is received inside the distillation space D may be maximized, and accordingly, distillation of the refrigerant R received inside the distillation space D may be effectively performed.

Referring to FIGS. 5, 6, 9, and 10, the heat exchanger 140 may include the outlet header 144. The outlet header 144 may extend in the upper area of the heat exchange piping 143 in the horizontal direction Y which crosses the axial direction X. The outlet header 144 may be disposed in a side area, of the axial direction X, of the heat exchange piping 143. The outlet header 144 may serve as a transfer pipe into which the refrigerant R which finishes heat exchange flows and that transfers the refrigerant R to the outlet port 115.

The heat exchange piping 143 may be connected to the outlet header 144. Each of pipe of the heat exchange piping 143 may be connected to the outlet header 144 by the outlet branch pipe 144a. Each outlet branch pipe 144a may extend downward at a lower part of the outlet header 144 and horizontally bend. Each pipe of the heat exchange piping 143 may be connected to an end part of the horizontally bending outlet branch pipe 144a.

The heat exchanger 140 may include the outlet separation header 145. The outlet separation header 145 may connect the outlet header 144 and the outlet port 115. The outlet separation header 145 may be coupled to the outlet header 144 and the outlet port 115 in a separable manner.

The outlet separation header 145 may include a portion extending at an outside, of the horizontal direction Y, of the inlet separation header 142 in the axial direction X and coupled to the outlet header 144 by an elbow S3.

The outlet separation header 145 may include a portion bending, toward the outlet port 115, at another side, of the axial direction X, of the portion extending in the axial direction X. For example, as illustrated in FIG. 5, the outlet separation header 145 may extend from an end part of the portion extending in the axial direction X and then bend in the horizontal direction Y At this point, the outlet port 115 and the outlet separation header 145 may be coupled to an elbow socket S4.

Through such a structure, the outlet separation header 145 may connect the outlet port 115 and the outlet header 144 while avoiding interference with the inlet separation header 142.

However, it is not limited thereto. The outlet separation header 145 may be formed in various shapes in a range in which the outlet separation header 145 does not interfere with the inlet separation header 142 and the inlet header 141. For example, the outlet separation header 145 may further include a portion extending in the horizontal direction Y from one side, of the axial direction X, of the portion extending in the axial direction X. In this case, the outlet header 144 and the outlet separation header 145 may be straightly connected to each other by a nipple socket.

Referring to FIG. 5, the support structure 150 may include at least two support structures 150 arranged in the axial direction X. For example, the support structure 150 may include the first support structure 150a and the second support structure 150b. The first support structure 150a may be disposed at the one side of the axial direction X, and the second support structure 150b may be disposed at another side of the axial direction X. That is, it may be understood that the first support structure 150a is the support structure 150 which is adjacent to the opening part 111 of the shell 110 and that the second support structure 150b is the support structure which is disposed far from the opening part 111. Excluding that the first support structure 150a includes the fixation foot 152 and that the second support structure does not include the fixation foot 152, detailed elements of the first support structure 150a and the second support structure 150b may be identical.

Hereinafter, unless clear descriptions for the first support structure 150a and the second support structure 150b are present, the first support structure 150a and the second support structure 150b may be understood as being all referred to as the support structure 150.

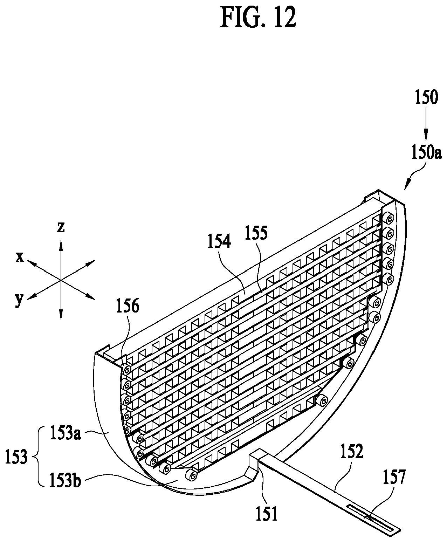

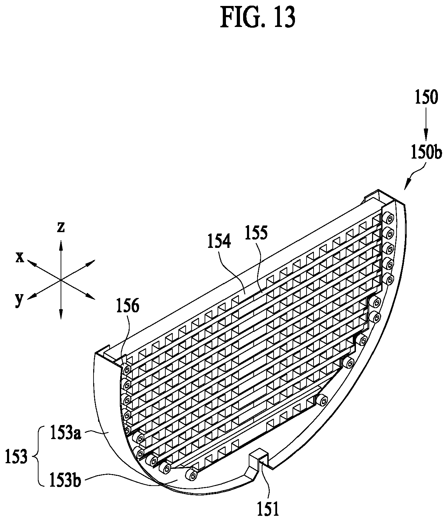

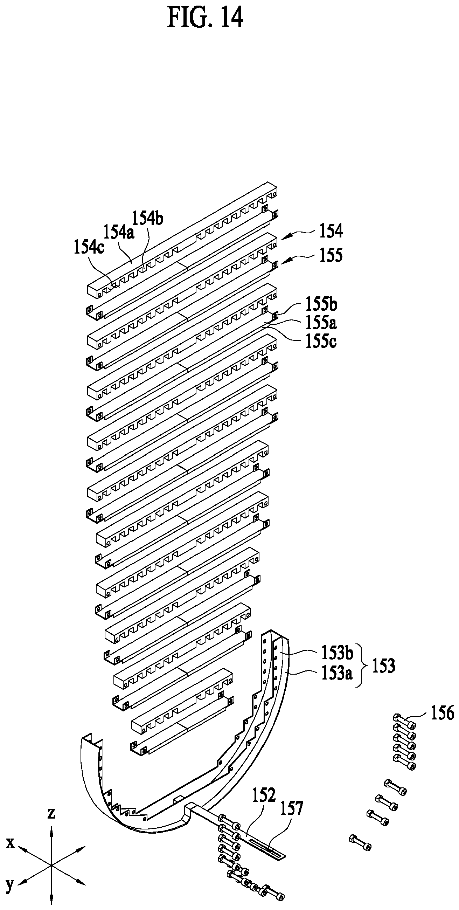

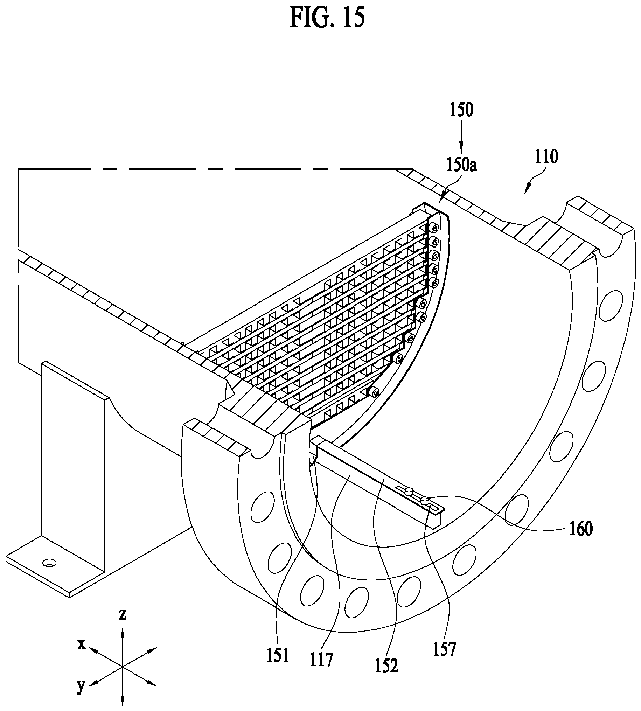

FIG. 11 is a perspective sectional diagram illustrating a portion of elements of a distillation unit according to an example embodiment of the present disclosure. FIGS. 12 and 13 are perspective diagrams illustrating a portion of elements of a distillation unit according to an example embodiment of the present disclosure. FIG. 14 is an exploded perspective diagram illustrating a portion of elements of a distillation unit according to an example embodiment of the present disclosure. FIG. 15 is an enlarged perspective sectional diagram illustrating a portion of elements of a distillation according to an example embodiment of the present disclosure.

FIG. 11 is a perspective sectional diagram illustrating a state in which the heat exchange piping 143 is seated on the support structure 150. FIG. 12 is a perspective diagram illustrating the first support structure 150a. FIG. 13 is a perspective diagram illustrating the second support structure 150b. FIG. 14 is an exploded perspective diagram illustrating the first support structure 150a. FIG. 15 is an enlarged perspective sectional diagram illustrating a portion at which the support structure 150 is coupled to an inner circumferential surface of the shell 110.

Referring to FIGS. 11 through 14, the support structure 150 may include a frame 153. The frame 153 may extend in a circumferential direction along the inner circumferential surface of the shell 110. The frame 153 may be formed in a U-shape to correspond to a shape of the inner circumferential surface of the shell 110. An outer circumferential surface of the frame 153 may be formed as a curved surface having curvature corresponding to curvature of a curved surface forming the inner circumferential surface of the shell 110. Through this, when the support structure 150 is seated on an inside of the shell 110, the outer circumferential surface of the frame 153 may be brought into contact with the inner circumferential surface of the shell 110. Thus, structural stability may be improved.

The frame 153 may include an outer circumferential part 153a. The outer circumferential part 153a may extend in an arc shape along an inner side surface of the shell 110. Specifically, the outer circumferential part 153a may be a plate having the curvature corresponding to the curvature of the curved surface of the inner circumferential surface of the shell 110 and having a predetermined width in the axial direction X. The outer circumferential part 153a as a portion brought into contact with the inner circumferential surface of the shell 110 may have a curvature corresponding to the inner circumferential surface of the shell 110 and be accordingly seated on the inside of the shell 110. In addition, the outer circumferential part 153a may have a thickness in the axial direction X and be structurally strengthened accordingly.

The frame 153 may include a flange part 153b. The flange part 153b may protrude toward an inside of the outer circumferential part 153a. The flange part 153b may be a plate extending from an inner circumferential surface of the outer circumferential part 153a toward a radially directed inside.

The flange part 153b may be formed with two flange parts. Two flange parts 153b may be arranged in the axial direction X. The two flange parts 153b may be disposed at an interval larger than a width of a plurality of clamp support parts 155 in the axial direction X. Both end parts of a plurality of clamps 154 and the plurality of clamp support parts 155 may be disposed between the two flange parts 153b and connected to the flange part 153b.

The flange part 153b may be formed in the circumferential direction along the inner circumferential surface of the outer circumferential part 153a. In other words, the flange part 153b may be formed in a shape approximate to "U" to correspond to a shape of the outer circumferential part 153a. Through this, the flange part 153b may perform a role of structurally strengthening the outer circumferential part 153a, and thus, overall strength of the support structure 150 may be improved.

In contrast, when the structurally strengthening is not required because the outer circumferential part 153a is formed with a sufficient thickness, the flange part 153b may protrude, toward the inside of the outer circumferential part 153a, only from a portion at which the plurality of clamps 154 and/or the plurality of clamp support parts 155 are coupled.

The support structure 150 may include the plurality of clamps 154. Each of the plurality of clamps 154 may extend in the horizontal direction Y which crosses the axial direction. The plurality of clamps 154 may be arranged in the vertical direction Z.

When provided, the number of the plurality of clamps 154 may correspond to the number of layers of the heat exchange piping 143. Each of the layers of the heat exchange piping 143 may be seated on the support structure 150 by the respective clamps 154.

The plurality of clamps 154 may be coupled to the frame 153. Specifically, both end parts of each of the plurality of clamps 154 may be disposed between the two flange parts 153b of the frame 153 and coupled to the flange part 153b.

Referring to FIG. 14, the plurality of clamps 154 may each include a body part 154a and a plurality of protruding parts 154b. The body part 154a may extend in the horizontal direction Y, and the plurality of protruding parts 154b may protrude downward from the body part 154a. Each of the plurality of clamps 154 may be understood as being formed in a shape of a rack gear having a square sawtooth. The plurality of protruding parts 154b may be brought into contact with respective upper surfaces of the plurality of clamp support parts 155 which is disposed to respective lower parts of the plurality of clamps 154.

A clamp hole 154c on which each pipe of the heat exchange piping 143 may be seated across may be formed between the plurality of protruding parts 154b. The clamp hole 154c may be a portion corresponding to a valley of a rack gear-shaped clamp 154. In the clamp hole 154c, an upper surface may be formed by the body part, a side surface may be formed by a protruding part 154b of the clamp 154, and a lower surface may be formed by a plate part 155a of a clamp support part 155. Since each pipe of the heat exchange piping 143 is disposed inside respective clamp holes 154c, and since a lower side of the clamp hole 154c is blocked by the clamp support part 155, each pipe of the heat exchange piping 143 may be seated on the clamp hole 154c. Each pipe of the heat exchange piping 143 may be prevented from laterally shaking. Through this, the heat exchanger 140 may be stably supported for the shell 110.

Referring to FIGS. 11 through 14, the support structure 150 may include the plurality of clamp support parts 155. The plurality of clamp support parts 155 may extend in the horizontal direction Y The plurality of clamp support parts 155 may be arranged alternately with the plurality of clamps 154 in the vertical direction Z.

When provided, the number of the plurality of clamp support parts 155 may correspond to the number of the plurality of clamps 154. That is, when provided, the number of the plurality of clamp support parts 155 may correspond to the number of the layers of the heat exchange piping 143. Each of the plurality of clamp support parts 155 may be disposed to a lower part of each of the plurality of clamps 154.

Referring to FIG. 11, each of the layers of the heat exchange piping 143 may be disposed between the plurality of clamps 154 and the plurality of clamp support parts 155. As described above, the clamp support part 155 may be disposed to be brought into contact with a lower part of the clamp 154 after each pipe of the heat exchange piping 143 is disposed to the clamp hole 154c which is formed between the clamp 154 and the protruding part 154b. Through this, the heat exchange piping 143 may be coupled to the support structure 150. Through such a structure, in a production process of the distillation unit 100, each of the layers of the heat exchange piping 143 may be sequentially seated between the plurality of clamps 154 and the plurality of clamp support parts 155, and simultaneously, the support structure 150 may guide each pipe of the heat exchange piping 143 to a position. Accordingly, a process of assembling the support structure 150 to the heat exchanger 140 may be facilitated.

Referring to FIG. 14, each of the plurality of clamp support parts 155 may include the plate part 155a. The plate part 155a may extend in the horizontal direction Y. The plate part 155a may be understood as a portion supporting each pipe of the heat exchange piping 143 seated on the clamp hole 154c in a gravitational direction.

Each of the plurality of clamp support parts 155 may include a coupling part 155b. The coupling part 155b may protrude from edges of one side and another side, of the axial direction X, of both end parts of the plate part 155a toward an upper end so as to cover both end parts of the clamp 154 which is disposed to the upper end. Each of the plurality of clamp support parts 155 may be understood as including two coupling parts 155b at each of the both end parts, thus four coupling parts 155b in total. The coupling part 155b may be seated between the two flange parts 153b and coupled to the flange part 153b.

The both end parts of the clamp 154, the coupling part 155b of the clamp support part 155, and the flange part 153b of the frame 153 may be fixed to each other with a coupling member 156 penetratingly coupled in the axial direction X in a state in which the both end parts of the clamp 154, the coupling part 155b of the clamp support part 155, and the flange part 153b of the frame 153 overlaps each other. Specifically, a coupling hole to which the coupling member 156 may be penetratingly disposed may be preformed to the protruding part 154b which is formed to the both end parts of the clamp 154, the coupling part 155b of the clamp support part 155, and the flange part 153b of the frame 153. After the clamp 154 and the clamp support part 155 are disposed to the frame 153 so that such coupling holes overlap each other, the coupling member 156 may penetrate the coupling holes in the axial direction. Through this, the clamp 154 and the clamp support part 155 may be fixed to the frame 153. Since the clamp 154 and the clamp support part 155 may be coupled to the frame 153 at one time through such a structure, the process of assembling the support structure 150 to the heat exchanger 140 may be facilitated.

However, it is not limited thereto. The frame 153, the plurality of clamps 154, and the plurality of clamp support parts 155 may be coupled in various ways such as fitting coupling through an additional mechanical coupling mechanism or coupling through welding.

Each of the plurality of clamp support parts 155 may include a guide part 155c. The guide part 155c may protrude from edges of one side and another side, of the axial direction X, of the plate part 155a toward a lower part so as to cover the clamp 154 which is disposed to the lower part. When each of the plurality of clamp support parts 155 is stacked on the clamp 154 below the lower part, since the guide part 155c may suppress a motion, in the axial direction X, of the clamp support part 155 on the clamp 154, the clamp support part 155 may be stably seated on an upper part of the clamp 154.

Referring to FIGS. 11 through 15, the support structure 150 may include the rail guide 151. The rail guide 151 may be formed to be engraved at a position corresponding to the rail of the shell 117. For example, the rail 117 may be formed to a lower part of the inner circumferential surface of the shell 110, and the rail guide 151 may be correspondingly formed to a lower part of the support structure 150. A depth of a groove forming the rail guide 151 may correspond to a protrusion height of the rail 117.

The rail guide 151 may be formed as the outer circumferential part 153a of the frame 153 bends. Specifically, the outer circumferential part 153a may be formed as a plate, a portion other than a portion at which the rail guide 151 is formed may extend in the arc shape along the inner circumferential surface of the shell 110, an engraved groove may be formed as the plate bends inward at the portion at which the rail guide 151 is formed.

The rail guide 151 may be seated on the rail 117. In a state in which the rail guide 151 is fixed to the support structure 150, the rail guide 151 of the support structure 150 may be seated on the rail 117 and move in the axial direction. Through this, a position of the heat exchanger 140 may be easily adjusted. In addition, since the rail guide 151 formed to be engraved may be seated on the rail 117 which protrudes from the inner circumferential surface of the shell 110, the support structure 150 may prevent the heat exchanger 140 which is coupled to the support structure 150 from shaking in the circumferential direction.

The support structure 150 may include the fixation foot 152. Specifically, the first support structure 150a may include the fixation foot 152. The fixation foot 152 may extend from a radially directed inner end part of the rail guide 151 toward one side of the axial direction X along the rail 117. That is, the fixation foot 152 may be a portion extending toward the opening part 111 from the rail guide 151 of the first support structure 150a which is disposed at a side of the opening part 111.

The fixation foot 152 may be fixed to the rail 117. An additional fixation member 160 may be coupled to the rail 117 by penetrating the fixation foot 152 in the vertical direction Z. Through this, the support structure 150 may be fixed to the shell 110.

Specifically, referring to FIG. 15, since the fixation foot 152 extends, in the axial direction X, from an inside of the rail guide 151 which is formed to have a depth corresponding to the protrusion height of the rail 117, a lower surface of the fixation foot 152 may be brought into contact with an upper surface of the rail 117 in a state in which the rail guide 151 of the first support structure 150a is seated on the rail 117. In this state, the support structure 150 may be fixed to the shell 110 when the fixation member 160 is fixed to the upper surface of the rail 117 by allowing the fixation member 160 to penetrate the fixation foot 152.

Since the fixation foot 142 extends in the axial direction X and is brought into contact to be fixed to the rail 117 which similarly extends in the axial direction X, a motion, in the axial direction X, of the entire heat exchanger 140 which is coupled to the support structure 150 with respect to the shell 110 may be prevented. Also, although a load of the axial direction X is added, since the shell 110 receives the load, the load may be prevented from concentrating on a header coupling part near the inlet port 114 (illustrated in FIG. 4) and the outlet port 115 (illustrated in FIG. 4).

However, it is not limited thereto. The support structure 150 may be fixed to the shell 110 in various ways. For example, the fixation foot 152 and the rail 117 may be coupled by being fitted to each other with a structure for coupling with an additional mechanical mechanism being formed thereto, or the fixation foot 152 and the rail 117 may be coupled by being welded to each other.

Referring to FIGS. 12, 14, and 15, the fixation foot 152 may include a coupling hole 157. The coupling hole 157 may be a hole penetratingly formed to the fixation foot 152 in the vertical direction Z. The fixation member 160 may pass through the coupling hole 157 and be coupled to the rail 117. A coupling groove (not illustrated) may be formed on the upper surface of the rail 117 so that the fixation member 160 may be coupled. For example, the fixation member 160 may be a bolt, and the coupling groove may be a bolt hole to which the fixation member 160 is coupled with bolting.

The coupling hole 157 may extend in the axial direction X. Specifically, the support structure 150 may be fixed to the shell 110 after a position of the support structure 150 is adjusted while the rail guide 151 moves in the axial direction X in a state in which the rail guide 151 is seated on the rail 117. At this point, the coupling hole 157 may extend in the axial direction X, and thus, the fixation member 160 may penetrate the coupling hole 157 regardless of the adjusted position of the support structure 150 and be fixed to the rail 117. In addition, the coupling hole 157 may extend in the axial direction X, and thus, the position of the support structure 150 may be adjusted again after the fixation member 160 is slightly disengaged when position adjustment of the support structure 150 is required after the fixation foot 152 is primarily fixed to the rail 117.

A process of producing the distillation unit 100 according to an example embodiment of the present disclosure is as follows.

Initially, the outlet separation header 145 is fixed to an inside of the outlet port 115, and then, the inlet separation header 142 is fixed to an inside of the inlet port 114. At this point, since the outlet port 115 may be disposed further inside when viewed from the opening part 111 of the shell 110, it may be desired that the outlet separation header 145 is coupled earlier than the inlet separation header 142.

Afterward, the heat exchanger 140 may be inserted through the opening part 111 in the axial direction X. The heat exchanger 140 may be inserted inside the shell 110 while sliding in the axial direction X in the state in which the rail guide 151 of the support structure 150 is seated on the rail 117 of the shell 110. At this point, the inlet header 141, the heat exchange piping 143, and the outlet header 144 may be disposed inside the shell 110 in a state of being preassembled to the support structure 150.

At this point, the position of the heat exchanger 140 may be adjusted so that an end part of the detour part 141c of the inlet header 141 is positioned to an end part of the inlet separation header 142 and so that an end part of the outlet header 144 is positioned to an end part of the outlet separation header 145. Such position adjustment of the heat exchanger 140 may be performed while the rail guide 151 of the support structure 150 moves in the axial direction X in the state in which the rail guide 151 is seated on the rail 117.

The heat exchanger 140 may be fixed to the shell 110 by allowing the fixation member 160 to penetrate the coupling hole 157 and to be coupled to the rail 117 after the position is adjusted in the axial direction X. At this point, since the coupling hole 157 may be formed to extend in the axial direction X, the fixation member 160 may penetrate the coupling hole 157 and be coupled to the rail 117 regardless of a position, of the axial direction X, of the heat exchanger 140.

When additional position adjustment of the heat exchanger 140 is required after the heat exchanger 140 is fixed to the shell 110, the position of the heat exchanger 140 may be adjusted again by moving the support structure 150 in the axial direction X along the rail 117 after slightly disengaging the fixation member 160.

Then, the detour part 141c of the inlet header 141 and the inlet separation header 142 may be coupled with the nipple socket S1. The nipple socket S1 may be coupled to the inlet separation header 142 in advance or coupled to the detour part 141c in advance. Furthermore, the outlet header 144 and the outlet separation header 145 may be coupled with the elbow socket S3. The elbow socket S3 may be coupled to the outlet separation header 145 in advance or coupled to the outlet header 144 in advance.

Lastly, as described above, the inlet header 141 and the inlet separation header 142 may be coupled, and the outlet header 144 and the outlet separation header 145 may be coupled. Since such a coupling region may be positioned near the opening part 111 of the shell 110, a producer may easily couple the heat exchanger 140 to the inside of the shell 110 even if the shell 110 which has a small inner diameter for the distillation unit 100 which is compact is used.

The above-described example embodiments or other example embodiments are not mutually exclusive or distinguished from each other. Elements or functions of the above-described example embodiments or the other example embodiments each may be used in combination or combined with each other.

For example, an element A described in a predetermined example embodiment and/or drawing and an element B described in another example embodiment and/or drawing may be combined. That is, even when combination between the elements is not directly described, the combination is possible unless the elements are described as being not combinable.

The above detailed description is not to be limitedly construed in all aspects and should be considered as an example. The scope of the present disclosure is to be determined by a reasonable interpretation of the accompanying claims, and all changes in a range equivalent to the present disclosure is included in the scope of the present disclosure.

## Claims

1. A distillation unit comprising:
a shell formed in a cylindrical shape extending in an axial direction with an opening part formed at one side of the axial direction;
a heat exchanger disposed inside the shell; and
a support structure disposed inside the shell and configured to support the heat exchanger for the shell,
wherein the heat exchanger comprises heat exchange piping of which a plurality of pipes formed in a horizontal spiral shape is arranged in a vertical direction,
the support structure is formed in a plate shape crossing the axial direction, and
the heat exchange piping is seated across the support structure in the axial direction.

2. The distillation unit of claim 1, wherein the support structure comprises:
a frame extending in a circumferential direction along an inner circumferential surface of the shell;
a plurality of clamps extending in a horizontal direction crossing the axial direction, arranged in the vertical direction, and coupled to the frame; and
a plurality of clamp support parts extending in the horizontal direction, arranged alternately with the plurality of clamps in the vertical direction, and coupled to the frame, and
each layer of the heat exchange piping is disposed between the plurality of clamps and the plurality of clamp support parts.

3. The distillation unit of claim 2, wherein each of the plurality of clamps comprises:
a body part extending in the horizontal direction; and
a plurality of protruding parts protruding downward from the body part, and
a clamp hole on which each pipe of the heat exchange piping is to be seated across is formed between the plurality of protruding parts.

4. The distillation unit of claim 2, wherein the frame comprises:
an outer circumferential part extending in an arc shape along an inner side surface of the shell; and
two flange parts protruding toward an inside of the outer circumferential part and arranged in the axial direction,
the plurality of clamp support parts comprises:
a plate part extending in the horizontal direction; and
a coupling part protruding from edges of one sides and another sides, of the axial direction, of both end parts of the plate part toward an upper part so as to cover both end parts of the clamps which are disposed to the upper part, and
the both end parts of the clamps, the coupling part, and the flange parts are fixed to each other with a coupling member penetratingly coupled in the axial direction in a state in which the both end parts of the clamps, the coupling part, and the flange parts overlap each other.

5. The distillation unit of claim 4, wherein the flange parts are formed in a circumferential direction along an inner circumferential surface of the outer circumferential part.

6. The distillation unit of claim 2, wherein each of the plurality of clamp support parts comprises:
a plate part extending in the horizontal direction; and
a guide part protruding from edges of one side and another side, of the axial direction X, of the plate part toward a lower part so as to cover the clamps disposed to the lower part.

7. The distillation unit of claim 1, further comprising a rail protruding inward and extending in the axial direction from an inner circumferential surface of the shell,
wherein a rail guide is formed, to the support structure, to be engraved at a position corresponding to the rail and is seated on the rail.

8. The distillation unit of claim 7, wherein the support structure comprises:
a first support structure disposed at the one side of the axial direction; and
a second support structure disposed at another side of the axial direction, and
the first support structure comprises a fixation foot that extends from a radially directed inner end part of the rail guide toward the one side of the axial direction along the rail and is fixed to the rail.

9. The distillation unit of claim 8, wherein a coupling hole extending in the axial direction is formed to the fixation foot, and
the heat exchanger is fixed to the shell by allowing a fixation member to penetrate the coupling hole and to be coupled to the rail.
